# EUROPÄISCHE PATENTANMELDUNG

(11) **EP 2 950 200 A1**
(43) Veröffentlichungstag der Anmeldung: **02.12.2015**
(21) Anmeldenummer: 14465512.3
(22) Anmeldetag: 28.05.2014
(51) Int. Cl.: G06F 3/16

(54) **Vorrichtung und Verfahren zur Audiowiedergabe für ein Kombiinstrument eines Kraftfahrzeuges**

(71) Anmelder: Continental Automotive GmbH, 30165 Hannover (DE)
(72) Erfinder: Thomas, Hug, 78733 Aichhalden (DE); Kreutzer, Michael, 78126 Neuhausen (DE); Rapp, Stefan, 78559 Gosheim (DE); Sandulescu, Bogdan, Timisoara (RO); Valea, Alina, 300465 Timisoara (RO)

(57) **Zusammenfassung**

Die Erfindung betrifft eine Vorrichtung zur Audiowiedergabe für ein Kombiinstrument eines Kraftfahrzeuges, umfassend: eine Master-Controllereinrichtung, welche dazu ausgelegt ist, eine Abspielsteuerung für mindestens ein Einzelgeräusch bereitzustellen; und eine Slave-Controllereinrichtung, welche mit der Master-Controllereinrichtung gekoppelt ist und welche dazu ausgelegt ist, Audio-Daten des Einzelgeräusches vor einem Abspielen des Einzelgeräusches zu verarbeiten.

## Beschreibung

### Technisches Gebiet

Die vorliegende Erfindung betrifft ein Audiosystem für ein Kraftfahrzeug. Insbesondere betrifft die vorliegende Erfindung eine Vorrichtung und ein Verfahren zur Audiowiedergabe für ein Kombiinstrument eines Kraftfahrzeuges.

### Technischer Hintergrund

In modernen Fahrzeugen werden Warn- und Hinweistöne an den Fahrer abhängig von spezifischen Betriebssituationen des Fahrzeugs ausgegeben.

Derzeit werden im Wesentlichen zwei Ansätze zur Ausgabe von Warn- und Hinweistönen verfolgt. Warn- und Hinweistöne werden über das Soundsystem des Fahrzeugs, beispielsweise einem Audiosystem zugeordnete Lautsprecher, ausgeben.

Die DE 10 2007 048 927 A1 beschreibt ein Kombiinstrument für ein Fahrzeug, mit einem Gehäuse, welches einen Hohlraum zur Aufnahme von zumindest einer Schallquelle aufweist, und zumindest einen von dem Hohlraum abzweigenden Schallkanal umfasst, wobei der Hohlraum und der Schallkanal in das Gehäuse integriert sind.

### Zusammenfassung der Erfindung

Es ist Aufgabe der vorliegenden Erfindung, ein Kombiinstrument für ein Fahrzeug zu schaffen, bei dem die akustische Ausgabe von Signalen verbessert werden kann.

Diese Aufgabe wird durch die Gegenstände der unabhängigen Ansprüche gelöst. Ausführungsformen und Weiterbildungen sind den abhängigen Ansprüchen, der Beschreibung und den Figuren zu entnehmen.

Ein erster Aspekt der Erfindung betrifft eine Vorrichtung zur Audiowiedergabe für ein Kombiinstrument eines Kraftfahrzeugs, wobei die Vorrichtung umfasst: eine Master-Controllereinrichtung, welche dazu ausgelegt ist, eine Abspielsteuerung für mindestens ein Einzelgeräusch bereitzustellen.

Ferner umfasst die Vorrichtung eine Slave-Controllereinrichtung, welche mit der Master-Controllereinrichtung gekoppelt ist und welche dazu ausgelegt ist, Audio-Daten des Einzelgeräusches vor einem Abspielen des Einzelgeräusches zu verarbeiten.

Nach einem zweiten Aspekt der vorliegenden Erfindung ist ein Kombiinstrument vorgesehen, wobei das Kombiinstrument eine Vorrichtung nach dem ersten Aspekt oder nach einer beliebigen Ausführungsform des ersten Aspektes umfasst.

Nach einem dritten Aspekt der vorliegenden Erfindung ist ein Verfahren vorgesehen, wobei das Verfahren zur Audiowiedergabe für ein Kombiinstrument eines Kraftfahrzeugs die folgenden Verfahrensschritte umfasst: Bereitstellen einer Abspielsteuerung für mindestens ein Einzelgeräusch; und Bearbeiten von Audio-Daten für ein Abspielen des Einzelgeräusches.

Vorteilhafte Ausgestaltungen der Erfindung sind in den Unteransprüchen gekennzeichnet.

Die vorliegende Erfindung zeichnet sich dadurch aus, dass eine hierarchisch gesplittete oder hierarchisch aufgeteilte Master-Slave-Architektur verwendet wird.

Als Master/Slave (englisch für Herr/Sklave) wird eine Form der hierarchischen Verwaltung des Zugriffs auf eine gemeinsame Ressource meist in Form eines gemeinsamen Datenkanals in zahlreichen Problemstellungen der Regelung und Steuerung bezeichnet. Alternative Bezeichnungen für die Master-Controllereinrichtung und die Slave-Controllereinrichtung lauten beispielsweise auch "Device 0", auf Deutsch "Gerät 0", und "Device 1", auf Deutsch "Gerät 1".

Eine Master-Controllereinrichtung der Master-Slave-Architektur übernimmt eine Abspielsteuerung, oder mit anderen Worten ausgedrückt, die Master-Controllereinrichtung kann per Start-oder Stoppbefehl die Wiedergabe von Tönen auf der Grundlage verschiedener Eingangsbedingungen durchführen.

Eingangsbedingungen können über einen CAN Bus von der Master-Controllereinrichtung verarbeitet werden und ein Abspielen eines Geräuschs oder eines auditiven Hinweises bedingen.

Die in der Abspielsteuerung enthaltenen Eingangsbedingungen können Verknüpfungen mit Priorisierungsdaten der Einzelgeräusche aufweisen und hierdurch kann die Abspielsteuerung für eine Mehrzahl von Einzelgeräuschen bereitgestellt werden.

Die Slave-Controllereinrichtung, welche mit der Master-Controllereinrichtung gekoppelt ist, übernimmt die Verarbeitung von Audiodaten, etwa das Einlesen von Audiodaten, etwa in der Form von WAVE-Dateiformaten oder einem sonstigen Containerformat zur digitalen Speicherung von Audiodaten und mit Informationen über deren Format.

Der Begriff Koppelung umfasst dabei eine drahtlose oder drahtgebunden Steuer- oder Datenverbindung oder jegliche Kommunikationsverbindung zwischen der Master-Controllereinrichtung und der Slave-Controllereinrichtung.

Damit erlaubt die vorliegende Erfindung vorteilhaft, eine vereinfachte und Rechnerkapazität einsparende Wiedergabe von Audiodaten zu ermöglichen.

In einer vorteilhaften Ausführungsform ist vorgesehen, dass die Master-Controllereinrichtung dazu ausgelegt ist, die Abspielsteuerung des Einzelgeräusches mittels eines Befehls zum Starten der Wiedergabe des Einzelgeräusches oder mittels eines Befehls zum Stoppen der Wiedergabe des Einzelgeräusches bereitzustellen.

Dies erhöht vorteilhaft die Robustheit oder Zuverlässigkeit des Verfahrens.

In einer vorteilhaften Ausführungsform der vorliegenden Erfindung ist vorgesehen, dass die Slave-Controllereinrichtung dazu ausgelegt ist, eine Datenstruktur der Audio-Daten zu verarbeiten. Mit anderen Worten ausgedrückt, kann die Slave-Controllereinrichtung eine Aufbereitung oder Datenverarbeitung von Audiorohdaten vor deren Wiedergabe vornehmen.

Dies erlaubt vorteilhaft, eine schnelle und einfache Steuerung der Klangqualität des auszugebenden Einzelgeräusches für die Audiowiedergabe bereitzustellen.

In einer vorteilhaften Ausführungsform der vorliegenden Erfindung ist vorgesehen, dass die Slave-Controllereinrichtung dazu ausgelegt ist, mit einem seriellen Datenbus zu kommunizieren.

Dies erlaubt vorteilhaft, eine effiziente und sichere Datenkommunikation mit sonstigen Sensor- und/oder Datenverarbeitungssystem des Kraftfahrzeuges ermöglichen.

In einer vorteilhaften Ausführungsform der vorliegenden Erfindung ist vorgesehen, dass die Master-Controllereinrichtung dazu ausgelegt ist, mit einem seriellen Datenbus zu kommunizieren.

Dies erlaubt vorteilhaft, die Audiowiedergabe mit einem reduzierten Rechenaufwand zu ermöglichen.

In einer vorteilhaften Ausführungsform der vorliegenden Erfindung ist vorgesehen, dass die Vorrichtung dazu ausgelegt ist, als den seriellen Datenbus einen Master-Slave-Bus zu verwenden.

Dies erhöht vorteilhaft die Robustheit oder Zuverlässigkeit des Verfahrens.

In einer vorteilhaften Ausführungsform der vorliegenden Erfindung ist vorgesehen, dass die Master-Controllereinrichtung dazu ausgelegt ist, die Abspielsteuerung für eine Mehrzahl von Einzelgeräuschen anhand eines Auswertens von Priorisierungsdaten der Einzelgeräusche bereitzustellen.

Durch das Auswerten der Priorisierungsdaten der Einzelgeräusche können in vorteilhafter Weise parallel Sound- bzw. Einzelgeräusch-Anforderungen bearbeitet werden. Dies ermöglicht ferner vorteilhaft, die Einzelgeräusche jeweils mit anhand der Priorisierungsdaten abgespeicherten Prioritäten zu versehen. Dadurch kann in vorteilhafter Weise bei einer sich überschneidender Anforderung der höchst priore Sound bzw. Einzelgeräusch abgespielt werden.

Folglich wird beispielsweise über den Lautsprecher je nur ein Einzelgeräusch ausgegeben. Bei einer Mehrfachanforderung, d. h. bei sich zumindest teilweise zeitlich überschneidenden Anforderungen, wird jedoch nur das Einzelgeräusch mit der höchsten Priorität ausgegeben.

Ferner kann ein Einzelgeräusch auch nur vereinzelt, d. h. mit höchst möglicher priore gekennzeichnet, abgespielt werden, etwa ein besonders beachtlicher Warn- oder Hinweiston.

In einer vorteilhaften Ausführungsform der vorliegenden Erfindung ist vorgesehen, dass die Master-Controllereinrichtung dazu ausgelegt ist, die Abspielsteuerung für eine oder die Mehrzahl von Einzelgeräuschen mittels eines parallelen Abspielens von mindestens zwei Einzelgeräuschen aus der Mehrzahl von Einzelgeräuschen bereitzustellen.

In anderen Worten ausgedrückt, Einzelgeräusche werden parallel abgespielt bzw. ausgegeben am Lautsprecher. Dies ermöglicht vorteilhaft, dass Einzelgeräusche parallel abgespielt werden, wie etwa ein Warnton und gleichzeitig ein Blinker-Geräusch.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Figuren

Die beiliegenden Zeichnungen sollen ein weiteres Verständnis der Ausführungsformen der Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt. Es zeigen:
- Fig. 1: eine schematische Darstellung einer Vorrichtung zur Audiowiedergabe für ein Kombiinstrument eines Kraftfahrzeugs gemäß einer Ausführungsform der Erfindung;
- Fig. 2: eine schematische Darstellung eines Flussdiagramms eines Verfahren zur Audiowiedergabe für ein Kombiinstrument eines Kraftfahrzeugs gemäß einer weiteren Ausführungsform der Erfindung; und
- Fig. 3: eine schematische Darstellung eines Kombiinstruments für ein Kraftfahrzeuggemäß einer weiteren Ausführungsform der Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

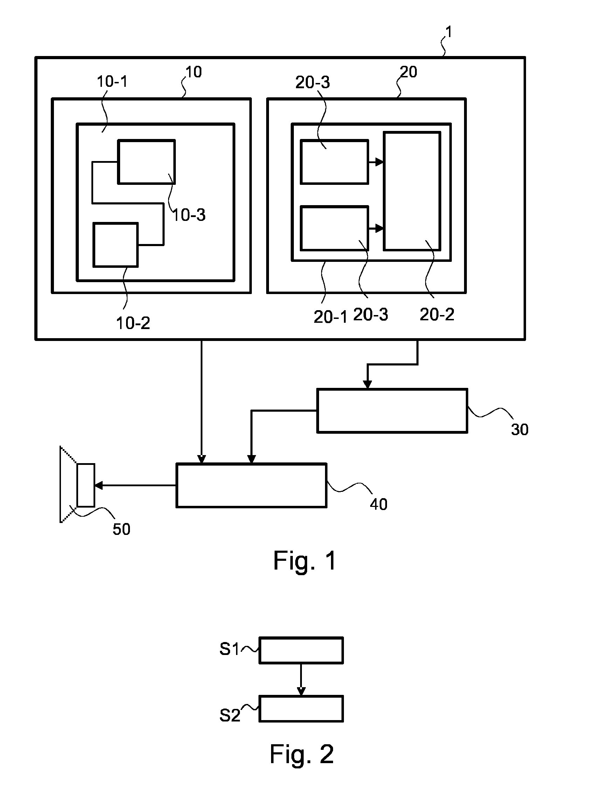

Die Figur 1 zeigt eine schematische Darstellung einer Vorrichtung zur Audiowiedergabe für ein Kombiinstrument eines Kraftfahrzeugs gemäß einer Ausführungsform der Erfindung.

Eine Vorrichtung 1 zur Audiowiedergabe für ein Kombiinstrument eines Kraftfahrzeugs umfasst beispielsweise eine Master-Controllereinrichtung 10 und eine Slave-Controllereinrichtung 20.

Der Begriff Kraftfahrzeug umfasst jegliche durch einen Motor angetriebene, nicht an Schienen gebundene Fahrzeuge oder in anderen Worten ausgedrückt, nicht dauerhaft spurgeführte Landfahrzeuge, die durch Maschinenkraft bewegt werden.

Die Master-Controllereinrichtung 10 kann dazu ausgelegt sein, eine Abspielsteuerung für mindestens ein Einzelgeräusch bereitzustellen.

Die Master-Controllereinrichtung 10 kann eine ferner eine Abspielsteuerungseinrichtung 10-1 aufweisen.

Die Master-Controllereinrichtung 10 kann eine Funktionseinheit 10-2 zur Initialsierung eines Verstärkerschaltkreises 40 und/oder zur Initialsierung eines Digital-Analog-Umsetzerschaltkreises 30 verwendet werden.

Ein Digital-Analog-Umsetzerschaltkreis (DAU, engl. digital-to-analog converter (DAC)), auch Digital-Analog-Wandler oder D/A-Wandler genannt, wird verwendet, um digitale Signale oder einzelne Werte in analoge Signale umzusetzen.

Die Ansteuerung des Verstärkerschaltkreises 40 und/oder die Ansteuerung des Digital-Analog-Umsetzerschaltkreises 30 durch die Master-Controllereinrichtung 10 kann mittels eines I²C Busses erfolgen, für englisch Inter-Integrated Circuit, im Deutschen gesprochen als I-Quadrat-C, oder englisch I-Squared-C oder I-2-C.

Ferner kann die Ansteuerung des Verstärkerschaltkreises 40 und/oder die Ansteuerung des Digital-Analog-Umsetzerschaltkreises 30 mittels eines sonstigen seriellen Datenbusses von der Master-Controllereinrichtung 10 vorgenommen werden.

Die Master-Controllereinrichtung 10 kann zur Steuerung einer Laustärke der Wiedergabe anhand einer Steuerung des Verstärkerschaltkreises 40 verwendet werden.

Der Verstärkerschaltkreis 40 kann mit einer Lautsprechereinrichtung 50 gekoppelt sein, welche dazu ausgelegt, Audiosignal zu empfangen und in mechanische Schwingungen (Schall) zu übertragen.

Die Master-Controllereinrichtung 10 kann ferner zum Berechnen einer Klanglogik oder einer realistischen Klangwiedergabe mit realistischem Klangeindruck einen Soundprozessor 10-3 in Form eines Signalverarbeitungsprozessors aufweisen.

Die Slave-Controllereinrichtung 20 kann mit der Master-Controllereinrichtung 10 gekoppelt sein und kann ferner dazu ausgelegt sein, Audio-Daten des Einzelgeräusches vor einem Abspielen des Einzelgeräusches zu verarbeiten.

Die Slave-Controllereinrichtung 20 und/oder die Master-Controllereinrichtung 10 können mit einem CAN-Bus (Controller Area Network) des Kraftfahrzeuges gekoppelt werden. Ein CAN-Bus ist ein serielles Bussystem und gehört zu den Feldbussen.

Ein CAN-Bus arbeitet nach dem CSMA/CR (Carrier Sense Multiple Access / Collision Resolution)-Verfahren (nicht zu verwechseln mit CSMA/CD wie bei Ethernet). Dabei werden Kollisionen beim Buszugriff durch die Arbitrierung oder Bit-Arbitrierung aufgelöst.

Die Slave-Controllereinrichtung 20 und/oder die Master-Controllereinrichtung 10 können auch unter der Verwendung eines digitalen Signalprozessors realisiert werden.

Ferner können die Slave-Controllereinrichtung 20 und/oder die Master-Controllereinrichtung 10 auch in der Form eines "Field Programmable Gate Array" (FPGA) realisiert werden, d. h. beispielsweise in der Form eines integrierten Schaltkreises (IC) der Digitaltechnik, in den eine logische Schaltung programmiert werden kann. Die englische Bezeichnung kann übersetzt werden als: im (Anwendungs-)Feld programmierbare (Logik-)Gatter-Anordnung.

Ferner können die Slave-Controllereinrichtung 20 und/oder die Master-Controllereinrichtung 10 auch in der Form einer Anwendungsspezifischen integrierten Schaltung (englisch application-specific integrated circuit, ASIC, auch Custom Chip) realisiert werden oder als eine sonstige elektronische Schaltung, die als integrierter Schaltkreis realisiert wurde.

Die Slave-Controllereinrichtung 20 kann ferner eine Audiodatenverarbeitungseinheit 20-1 aufweisen.

Die Slave-Controllereinrichtung 20 kann Einzelgeräusche in einer Speichereinheit 20-3 abspeichern. Die Audio-Daten der Einzelgeräusche können von einem Soundprozessor 20-2 verarbeitet werden.

Die Slave-Controllereinrichtung 20 kann beispielsweise Mono-oder Stereodaten entsprechend den aktuell vorherrschenden Anforderungen an eine Wiedergabe in ein gewünschtes Mono- bzw. Stereoformat umformatieren, oder für eine einmalige oder eine wiederholte Wiedergabe der Einzelgeräusche sorgen.

Die Figur 2 zeigt eine schematische Darstellung eines Flussdiagramms eines Verfahrens zur Audiowiedergabe für ein Kombi-instrument eines Kraftfahrzeugs gemäß einer weiteren Ausführungsform der Erfindung.

Das Verfahren zur Audiowiedergabe für ein Kombiinstrument eines Kraftfahrzeugs umfasst folgende Schritte:
Als ein erster Schritt des Verfahrens erfolgt ein Bereitstellen S1 einer Abspielsteuerung für mindestens ein Einzelgeräusch.
Als ein zweiter Schritt des Verfahrens erfolgt Verarbeiten S2 von Audio-Daten für ein Abspielen des Einzelgeräusches. Dadurch kann ein gewünschter auditiver Hinweis an den Fahrer ausgegeben werden.

Prinzipiell lassen sich alle Arten von auditiven Hinweisen in drei Klassen einteilen

Auditive Hinweise in der Form von Alarmen und Warnungen haben eine höhere Priorität als andere Informationen und sollen die derzeitig ausgeführte Handlung unterbrechen und die Aufmerksamkeit auf etwas lenken, was sofortige Zuwendung benötigt. Zustands- und Überwachungsinformationen liefern Auskunft über die derzeit ausgeführte Tätigkeit.

Enkodierte Nachrichten geben numerische Daten in Geräuschmustern wieder und können ebenfalls als auditiver Hinweis ausgegeben werden.

Die Verfahrensschritte können dabei iterativ oder rekursiv und in beliebiger Reihenfolge wiederholt werden.

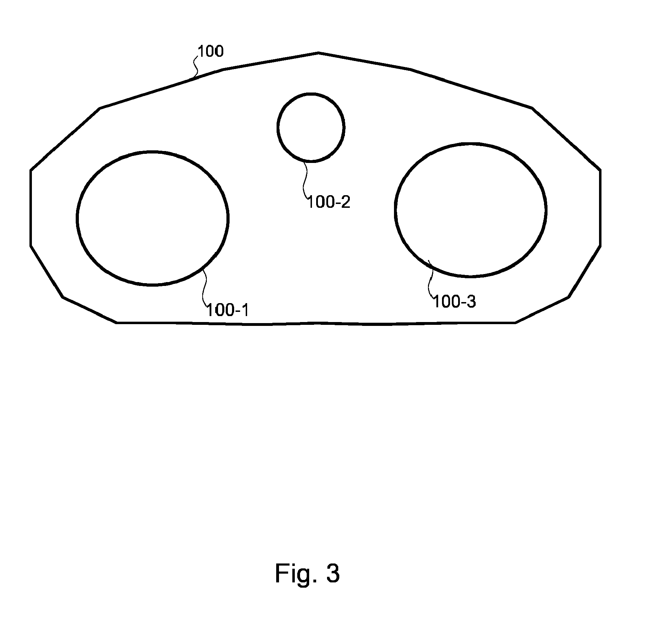

Die Figur 3 zeigt eine schematische Darstellung eines Kombiinstruments für ein Kraftfahrzeuggemäß einer weiteren Ausführungsform der Erfindung.

Ein Kombiinstrument 100 weist eine Vorrichtung 1 zur Audiowiedergabe auf.

Als Kombi-Instrument (Abkürzung für Kombinationsinstrument, englisch Instrument Cluster) bezeichnet man den Instrumentenblock von Kraftfahrzeugen (PKW, LKW, Motorräder oder sonstige Fahrzeuge), der etwa Tachometer 100-1, Kilometerzähler, Drehzahlmesser 100-3, Tankanzeige 100-2, Kühlmitteltemperaturanzeige, Kontrollleuchten und Fahrtrichtungsanzeiger (Blinker) aufweist.

Beispielsweise ist für die einzelnen Instrumente eine jeweils spezifische Klangausgabe bei bestimmten Ereignissen vorgesehen. Ferner können je nach Kraftfahrzeug unterschiedliche Bedienkonzepte mit eigenen Klanggeräuschen oder Einzelgeräuschen für die Infotainmentsysteme erforderlich sein.

Ferner kann parallel zur visuellen Anzeige per Kontrollleuchte bei bestimmten Fahrzuständen, wie etwa einem Abbiegen, für eine hörbare Rückmeldung gesorgt werden, indem das Blinkerrelais hörbar klackt oder das Kombiinstrument entsprechende Kontrolltöne produziert.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Vorrichtung (1) zur Audiowiedergabe für ein Kombiinstrument eines Kraftfahrzeuges, umfassend:
- eine Master-Controllereinrichtung (10), welche dazu ausgelegt ist, eine Abspielsteuerung für mindestens ein Einzelgeräusch bereitzustellen; und
- eine Slave-Controllereinrichtung (20), welche mit der Master-Controllereinrichtung gekoppelt ist und welche dazu ausgelegt ist, Audio-Daten des Einzelgeräusches vor einem Abspielen des Einzelgeräuschs zu verarbeiten.

2. Vorrichtung nach Anspruch 1, wobei die Master-Controllereinrichtung (10) dazu ausgelegt ist, die Abspielsteuerung des Einzelgeräuschs mittels eines Befehls zum Starten der Wiedergabe des Einzelgeräusches oder mittels eines Befehls zum Stoppen der Wiedergabe des Einzelgeräusches bereitzustellen.

3. Vorrichtung nach einem der Ansprüche 1 oder 2, wobei die Slave-Controllereinrichtung (20) dazu ausgelegt ist, eine Datenstruktur der Audio-Daten zu verarbeiten.

4. Vorrichtung nach einem der vorhergehenden Ansprüche, wobei die Slave-Controllereinrichtung (20) dazu ausgelegt ist, mit einem seriellen Datenbus zu kommunizieren.

5. Vorrichtung nach einem der vorhergehenden Ansprüche, wobei die Master-Controllereinrichtung (10) dazu ausgelegt ist, mit einem seriellen Datenbus zu kommunizieren.

6. Vorrichtung nach einem der vorhergehenden Ansprüche 4 bis 5, wobei die Vorrichtung (1) dazu ausgelegt ist, als den seriellen Datenbus einen Master-Slave-Bus zu verwenden.

7. Vorrichtung nach einem der vorhergehenden Ansprüche 1 bis 6, wobei die Master-Controllereinrichtung (10) dazu ausgelegt ist, die Abspielsteuerung für eine Mehrzahl von Einzelgeräuschen anhand eines Auswertens von Priorisierungsdaten der Einzelgeräusche bereitzustellen.

8. Vorrichtung nach einem der vorhergehenden Ansprüche 1 bis 7, wobei die Master-Controllereinrichtung (10) dazu ausgelegt ist, die Abspielsteuerung für eine oder die Mehrzahl von Einzelgeräuschen mittels eines parallelen Abspielens von mindestens zwei Einzelgeräuschen aus der Mehrzahl von Einzelgeräuschen bereitzustellen.

9. Kombiinstrument (100) für ein Kraftfahrzeug, wobei das Kombiinstrument (100) eine Vorrichtung (1) nach einem der vorhergehenden Ansprüche 1 bis 8 aufweist.

10. Verfahren zur Audiowiedergabe für ein Kombiinstrument eines Kraftfahrzeugs, umfassend die folgenden Verfahrensschritte:
- Bereitstellen (S1) einer Abspielsteuerung für mindestens ein Einzelgeräusch; und
- Verarbeiten (S2) von Audio-Daten für ein Abspielen des Einzelgeräusches.

11. Verfahren nach Anspruch 10, wobei das Bereitstellen der Abspielsteuerung des Einzelgeräusches mittels eines Befehls zum Starten der Wiedergabe des Einzelgeräusches oder mittels eines Befehls zum Stoppen der Wiedergabe des Einzelgeräusches mittels einer Master-Controllereinrichtung vorgenommen wird.

12. Verfahren nach einem der Ansprüche 10 oder 11, wobei eine Datenstruktur der Audio-Daten mittels einer Slave-Controllereinrichtung verarbeitet wird.
